# EUROPÄISCHE PATENTSCHRIFT

(11) **EP 1 785 605 B1**
(45) Veröffentlichungstag und Bekanntmachung des Hinweises auf die Patenterteilung: **17.09.2008**
(21) Anmeldenummer: 06023096.8
(22) Anmeldetag: 07.11.2006
(51) Int. Cl.: F01N 3/023, F02D 41/02, F01N 9/00

(54) **Verfahren zur Regeneration eines Dieselpartikelfilters und entsprechende Getriebesteuerung**
Method for the regeneration of a diesel particulate filter and corresponding transmission control
Procédé de régénération d'un filtre à particules diesel et commande de boîte de vitesses correspondant

(30) Priorität: 11.11.2005 DE 102005054261
(43) Veröffentlichungstag der Anmeldung: 16.05.2007
(73) Patentinhaber: Volkswagen Aktiengesellschaft, 38436 Wolfsburg (DE)
(72) Erfinder: Müller, Henning, 38518 Gifhorn (DE); Kalms, Rene, 38110 Braunschweig (DE); Schamscha, Axel, 38542 Leiferde (DE); Springstubbe, Matthias, 38104 Braunschweig (DE); Hoffman, Joachim, 23738 Lensahn (DE)

(56) Entgegenhaltungen:
- EP-A1- 1 437 492
- EP-A2- 0 888 921
- WO-A-20/04088100

## Beschreibung

Die Erfindung betrifft ein Verfahren zur Regeneration eines in einer Abgasanlage einer Verbrennungskraftmaschine, insbesondere eines Dieselmotors, angeordneten Partikelfilters mit Unterstützung durch Beeinflussung eines Schaltzustandes eines Automatikgetriebes des Fahrzeuges. Die Erfindung betrifft weiterhin eine Getriebesteuerung des Automatikgetriebes zur Durchführung des Verfahrens.

Zur Minderung der Partikelemissionen von Dieselverbrennungskraftmaschinen ist bekannt, in deren Abgasanlagen Partikelfilter anzuordnen. Die Dieselpartikelfilter absorbieren die in dem Abgas enthaltenen Partikel, bei denen es sich in erster Linie um Ruß handelt. Aufgrund seiner begrenzten Speicherkapazität muss der Partikelfilter in regelmäßigen Abständen regeneriert werden. Dies kann einerseits durch die Zuführung von geeigneten Additiven erfolgen, welche den Entflammpunkt der gespeicherten Partikel herabsetzen, oder durch Nacheinspritzung von Verbrennung von Kraftstoff in den Abgaskanal stromauf des Partikelfilters.

Aus EP 0 417 383 A ist ein Verfahren zur Partikelfilterregeneration bekannt, bei dem ein Abgasteilstrom mit Hilfe einer in einer separaten Brennkammer angeordneten Kraftstoffeindüsung und -verbrennung aufgeheizt wird, ehe das Abgas dem zu regenerierenden Partikelfilter zugeleitet wird. Um eine zuverlässige Zündung und Verbrennung des in der Brennkammer eingespritzten Kraftstoffes zu gewährleisten, erfolgt die Regeneration nur in Betriebspunkten, in denen ausreichend Luftüberschuss im Abgas enthalten ist, dies ist insbesondere bei niedrigen Lasten der Fall.

Systeme, die ohne Additive oder Kraftstoffnacheinspritzung auskommen, benötigen zur Regeneration des Filters bestimmte Betriebszustände, deren hohe Abgastemperaturen zum Abbrand des Rußes führen. Bekannt ist in diesem Zusammenhang, die Schaltstrategie von Automatikgetrieben gegenüber dem Normalbetrieb derart zu verändern, dass ausreichende Abgastemperaturen resultieren. Eine solche Strategie ist beispielsweise in WO 2004/088100 A beschrieben, wobei dort in bestimmten Betriebssituationen, etwa bei positiven Steigungen, die Änderung des Schaltzustandes des Automatikgetriebes und damit die Regenerationseinleitung unterdrückt wird. Aus FR 2820461 A ist ein Verfahren zur Regeneration eines Dieselparkikelfilters bekannt, bei dem durch Rückschaltung eines Automatikgetriebes in eine niedrigere Gangstufe gegenüber dem Normalbetrieb während der Regeneration eine erhöhte Motordrehzahl eingestellt wird und somit die Abgastemperatur angehoben wird. Dabei wird die Regeneration grundsätzlich nur in günstigen Betriebssituationen, beispielsweise im Hochlastbetrieb, durchgeführt.

Zusammenfassend lässt sich feststellen, dass gemäß bekannten Verfahren die Partikelfilterregeneration nur in bestimmten, für das jeweilige Verfahren günstigen Betriebssituationen zugelassen wird. Liegen weniger günstige Betriebspunkte vor, so wird die Partikelfilterregeneration nicht freigegeben. Dies hat den nachteiligen Effekt, dass bei langanhaltenden ungünstigen Bedingungen lange Zeit keine Regeneration erfolgen kann Dies führt unter anderem dazu, dass die Speicherkapazität der Partikelfilter unverhältnismäßig groß ausgelegt werden muss, um auch diese Fälle zu berücksichtigen.

Weiterhin ist bei den bekannten Verfahren nachteilig, dass der Fahrer, der keine Kenntnis von der auszuführenden Regeneration hat, von dem unerwarteten Schaltvorgang überrascht wird. Dies kann in sicherheitsgefährdende Weise zu Verunsicherungen und zum Ablenken von der Verkehrsituation führen. Ferner kann ein regenerationsbedingter Schalteingriff zu Fehlinterpretationen des Fahrverhaltens sowie des Fahrzeugzustandes durch den Fahrer führen, wodurch Fehlbedienungen des Fahrzeugs beziehungsweise unnötige Reparaturanforderungen ausgelöst werden können.

Der vorliegenden Erfindung liegt daher die Aufgabe zugrunde, ein Verfahren zur Regeneration eines Dieselpartikelfilters bei Fahrzeugen mit Automatikgetrieben bereitzustellen, das nicht zu überraschenden und unkomfortablen Auswirkungen auf das Fahrverhalten des Fahrzeuges führt und keine Irritationen beim Fahrer auslöst. Weiterhin sollte das Verfahren in weiten Betriebsbereichen einsetzbar sein.

Diese Aufgabe wird durch ein Verfahren mit den Merkmalen des Anspruches 1 sowie eine Getriebesteuerung nach Anspruch 10 gelöst. Das erfindungsgemäße Verfahren sieht vor, dass, falls zum Zeitpunkt der Feststellung einer Regenerationsnotwendigkeit und/oder eines Regenerationsabschlusses des Partikelfilters eine gewünschte Motordrehzahl nicht vorliegt (das heißt eine für die Regeneration gegenüber dem Normalbetrieb erhöhte Motormindestdrehzahl nicht erreicht oder überschritten wird beziehungsweise diese zur Beendigung der Regeneration nicht bereits unterschritten wird), die Änderung des Schaltzustandes des Automatikgetriebes so lange verzögert wird, bis eine Änderung einer Fahrleistungsanförderung, die durch eine entsprechende Gaspedalbetätigung des Fahrers oder eine automatische Geschwindigkeitsregelung ausgelöst wird, vorliegt. Auf diese Weise wird vermieden, dass der Fahrer durch eine von ihm nicht angeforderte Fahrleistungsänderung, die er in Form einer Drehzahländerung oder auch einer Momentenfluktuation wahrnimmt, irritiert wird. Mit anderen Worten wird der Schalteingriff des Automatikgetriebes zur Einleitung und/oder Beendigung der Regeneration gleichsam hinter einer Aktion des Fahrers beziehungsweise einer dynamischen Fahrsituation versteckt.

Im Falle einer Einleitung der Partikelfilterregeneration erfolgt die Änderung des Schaltzustandes des Automatikgetriebes insbesondere durch Zurückschalten in eine gegenüber dem Normalbetrieb niedrigere Gangstufe (das heißt ein Gang mit höherer Übersetzung), wodurch bei gegebener Fahrleistung die Motordrehzahl gegenüber dem Normalbetrieb erhöht und dadurch die Abgastemperatur gesteigert wird. Gleichzeitig wird auf diese Weise ein erhöhter Abgasmassenstrom erzeugt, der aufgrund des erhöhten Abgasgegendrucks vor dem Partikelfilter zu einer weiteren Temperaturerhöhung des Filters führt. Nach einer besonders bevorzugten Ausgestaltung der Erfindung wird im Falle der Regenerationseinleitung eine positive Fahrleistungsanforderung, das heißt ein Mehr an Fahrleistung, abgefordert, ehe die Zurückschaltung des Automatikgetriebes erfolgt. Im Falle einer positiven Fahrleistungsanforderung, beispielsweise dem Gasgeben bei einem Überholmanöver, ist der Fahrer gewohnt, dass es zu einer Rückschaltung und damit einer Motordrehzahlerhöhung kommen kann, um eine schnellere Beschleunigung zu erreichen. Daher wird er in einer solchen Situation mit einem Schaltvorgang rechnen und nicht durch diesen überrascht.

Auf der anderen Seite ist im Falle einer Beendigung der Regeneration des Partikelfilters, das heißt bei festgestelltem Regenerationsabschluss, bevorzugt vorgesehen, dass die Änderung des Schaltzustandes in Form einer Hochschaltung in einen gegenüber dem Regenerationszustand höheren Gang erfolgt, insbesondere in den nächsthöheren. Diese Aktion wird so lange verzögert, bis eine negative Fahrleistungsanforderung, beispielsweise eine Verzögerung, vorliegt.

Selbstverständlich wird der Schalteingriff vorzugsweise durch mindestens eine Maßnahme zur Momentenkompensation begleitet, um ein möglichst konstantes Drehmoment und damit keine für den Fahrer spürbaren Auswirkungen auf das Fahrverhalten zu erzeugen. Derartige Maßnahmen sind bekannt. Beispielsweise können sie in Form einer Veränderung der eingespritzten Kraftstoffmasse, der zugeführten Luftmenge und/oder der Einspritzzeitpunkte ausgeführt werden.

Eine bevorzugte Ausgestaltung der Erfindung sieht vor, dass die Größe (beziehungsweise der Betrag) der für den Schalteingriff erforderlichen Änderung der Fahrteistungsanforderung eine applizierbare Schwelle überschreiten muss, ehe die Änderung des Schaltzustandes des Automatikgetriebes erfolgt. Hierfür wird beispielsweise der Fahrpedalstand im Augenblick der Anforderung der Regenerationsnotwendigkeit abgespeichert. Erst, wenn der Fahrer einen applizierbaren positiven Betrag mehr an Gas gibt, kommt es zum Eingriff der Schaltung, insbesondere zur Zurückschaltung. Nimmt der Fahrer auf der anderen Seite jedoch das Gas nach Feststellung der Regenerationsnotwendigkeit zurück, wird der abgespeicherte Pedalwert entsprechend kontinuierlich verändert und damit nach unten mitgeführt, so dass der Fahrer auch hier immer nur die vorgegebene Differenz an Fahrleistungsanforderung zugeben muss, um die Schaltfunktion zu aktivieren. Die Durchführung der Hochschaltung im Falle der Regenerationsbeendigung wird analog durchgeführt, das heißt es wird ein applizierbarer negativer Betrag an Gas (Gasrücknahme) abgewartet, bis es zur Hochschaltung kommt. Dabei wird der abgespeicherte Basiswert des Pedalwertes nach oben mitgeführt.

Neben dem erfindungsgemäßen Abwarten der positiven oder negativen Fahrfeistungsanforderung zur Einleitung beziehungsweise Beendigung der Regeneration können weitere Kriterien zur Auslösung des Schalteingriffes des Automatikgetriebes vorgegeben werden. Eine besonders vorteilhafte Ausgestaltung der Erfindung sieht in diesem Zusammenhang vor, die Änderung des Schaltzustandes zur Einleitung der Regeneration erst bei Überschreitung einer applizierbaren Fahrzeuggeschwindigkeitsschwelle zuzulassen. Liegt die Fahrzeuggeschwindigkeit (beziehungsweise die zur Fahrzeuggeschwindigkeit proportionale Getriebeabtriebsdrehzahl) unterhalb des vorgegebenen Schwellenwertes, so wird der Schalteingriff zur Einleitung der Regeneration, das heißt die Rückschaltung, unterdrückt. So ist beispielsweise beim langsamen Rangieren, etwa in Parklücken, die Rückschaltung in einen niedrigeren Gang sowohl aus motorischen Gründen als auch aus Komfortgründen nicht sinnvoll und wird somit unterdrückt. Darüber hinaus dient diese Maßnahme der Vermeidung von vermehrten Abgasemissionen sowie eines erhöhten Geräuschpegels etwa in Spielstraßen oder Wohngebieten. Um Pendelschaltungen zu vermeiden, kann außer der Geschwindigkeitsschwelle noch eine applizierbare Hysterese vorgegeben werden. Dies: bedeutet, dass die zu unterschreitende Geschwindigkeitsschwelle zur Sperrung der Regenerationsfunktion etwas niedriger gewählt wird als die zu überschreitende Geschwindigkeitsschwelle zur Zulassung der Funktion.

Die Änderung der Fahrleistungsanforderung kann auf konventionelle Art durch eine Fahrpedalbetätigung durch den Fahrer erfolgen, also durch Betätigung des Gaspedals. Wird auf der anderen Seite mit einer Geschwindigkeitsregelanlage (GRA) gefahren, bei welcher der Fahrer eine gewünschte Fahrzeuggeschwindigkeit eingibt und diese automatisch eingeregelt wird, kann die Änderung der Fahrleistungsanforderung auch in Form einer GRA-Sollleistung angefordert werden. Hier wird die GRA-Sollleistung zum Zeitpunkt der Regenerationsanforderung gespeichert und eine entsprechende Sollleistungsänderung abgewartet, ehe die Schaltfunktion aktiviert wird. Wird die Sollleistung nach Regenerationsanforderung hingegen zurückgenommen, so wird der abgespeicherte Wert nach unten mitgeführt, höchstens jedoch bis 0 kW. Die gleichen Ausführungen gelten für den Fall, dass der Fahrer mit einer aktiven Fahrgeschwindigkeitsregelung (ACC für active oder adaptive cruise control) fährt. Hierbei handelt es sich um eine Weiterentwicklung der GRA, bei der nicht nur eine voreingestellte Geschwindigkeit aufrecht erhalten wird, sondern zusätzlich die Geschwindigkeit so angepasst wird, dass ein konstanter Abstand zu einem vorausfahrenden Fahrzeug eingehalten wird.

Abhängig von der Fahrsituation kann es in Ausnahmefällen dazu kommen, dass die Eintrittsbedingungen für den Schalteingriff des Automatikgetriebes über einen langen Zeitraum nicht erfüllt werden. Um in einem solchen Fall dennoch eine Regeneration auszulösen, ist in bevorzugter Ausführung vorgesehen, dass die für die Einleitung oder Beendigung der Regeneration erforderliche Änderung des Schaltzustandes spätestens nach Ablauf einer applizierbaren Zeitspanne nach Feststellung der Regenerationsnotwendigkeit und/oder des Regenerationsabschlusses erfolgt. Nur in diesem Fall führt der Zeitablauf zu einem Zwangseintritt in die Partiketfilterregeneration durch das Automatikgetriebe.

Befindet sich der Motor zum Zeitpunkt der Regenerationsanforderung bereits in einem Betriebszustand, in dem er oberhalb der für die Regenerationsunterstützung geforderten Motormindestdrehzahl ist, erfolgt im Getriebe sofort der Übergang in die Regenerationsunterstützung, da in diesem Fall keine Schaltung erforderlich ist und der Fahrer auch nicht durch eine Schaltung überrascht werden kann. Dies gilt analog auch für den Austritt aus der Regenerationsunterstützung. Befindet sich hier das Fahrzeug in einem Zustand, der keine Schaltung erfordert (die Motordrehzahl ist unterhalb der Hochschaltdrehzahl), kann die Regenrationsunterstützung sofort verlassen werden.

Die Erfindung betrifft ferner eine Getriebesteuerung eines Automatikgetriebes zur Unterstützung der Partikelfilterregeneration, die einen Programmalgorithmus aufweist, der das vorstehend beschriebene erfindungsgemäße Verfahren ausführt. Der Algorithmus kann in eine konventionelle Getriebesteuerung integriert sein. Ferner kann die Getriebesteuerung Teil einer ohnehin im Fahrzeug vorhandenen Motorsteuerung sein.

Dabei kann es sich bei dem Automatikgetriebe um ein konventionelles Wandler-Automatikgetriebe handeln oder um ein Doppelkupplungs-Automatikgetriebe. Bei letzterem handelt es sich um ein Direktschaftgetriebe (DSG), das zwei Getriebehälften umfasst, die motorseitig mit zwei Kupplungen zusammenwirken. Die eine verbindet den Kraftschluss mit den ungeraden Gängen (z.B. 1, 3, 5) und die andere Kupplung verbindet die geraden Gänge (z.B. 2, 4, 6) mit dem Motor. Der Gangwechsel erfolgt hier nun durch paralleles Öffnen der einen und Schließen der anderen Kupplung, wodurch ein vollständig ruckfreies Schalten gewährleistet wird. Sowohl das konventionelle Automatikgetriebe als auch das DSG können mit einer so genannten Tiptronic-Option ausgeführt sein. In diesem Fall kann der Fahrer wahlweise von dem Automatikmodus in den manuellen Tipmodus schalten. In den Drive- und Sportschaltprogrammen des Automatikmodus (D- und S-Positionen) wird das Verfahren wie vorstehend ausgeführt. Im Tipmodus sind drei Varianten denkbar, die auch nebeneinander implementiert sein können. Im Grundzustand des Tipmodus kommt es bei entsprechender Partikelfilterbeladung zu Zwangsschaltungen, um die geforderten Motordrehzahlen und Abgastemperaturen zu erreichen und die Regeneration zu bewirken. Da Zwangsschaltungen im Tipmodus aber unerwünscht sein können, kann gemäß der zweiten Variante darüber hinaus vorgesehen sein, dass die Funktion zum Schalteingriff abschaltbar ist. Eine dritte Betriebsart stellt einen Kompromiss dar und erlaubt den Eintritt in die Getriebeunterstützungsfunktion nur dann, wenn die Motordrehzahl ausreichend hoch ist, so dass keine Zwangsrückschaltung erfolgt. Eine Zurückschaltung erfolgt in diesem Modus erst nach dem erfolgten Eintritt in den Regenerationsunterstützungsmodus, wenn die Motordrehzahl unter die für einen aktuellen Gang applizierte Mindestdrehzahl sinkt. Bei aktivierter Unterstützung der DPF-Regeneration (Variante 1 und 3) werden Tipschaltungen durch den Fahrer in hohe Gänge, die zu einer Motordrehzahl unterhalb der geforderten Motormindestdrehzahl führen würden, unterbunden. Nach Anforderung eines Regenerationsabschlusses im Tipmodus erfolgt der Austritt aus der Regenerationsfunktion einfach, indem der Gang gehalten wird und keine weiteren Aktionen erfolgen.

Weitere vorteilhafte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: ein Blockschaltbild einer Antriebseinheit eines Dieselfahrzeugs gemäß der vorliegenden Erfindung,
- Figur 2: ein Ablaufdiagramm des erfindungsgemäßen Verfahrens und
- Figur 3: ein Blockdiagramm der Ein- und Ausgangsgrößen relevanter Signale.

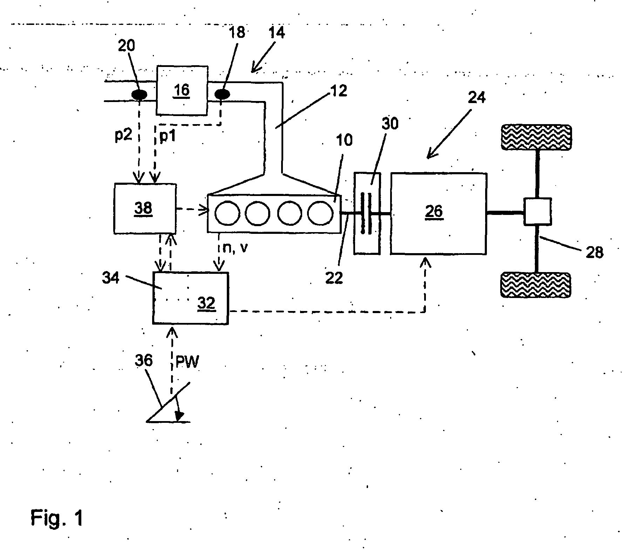

In Figur 1 ist ein beispielsweise vierzylindriger Dieselmotor mit dem Bezugszeichen 10 gekennzeichnet. Die von dem Dieselmotor 10 kommenden Abgase werden in einen Abgaskanal 12 einer insgesamt mit 14 bezeichneten Abgasanlage geleitet. In dem Abgaskanal 12 ist ein Dieselpartikelfilter 16 bekannter Art angeordnet, der Partikel des Abgases, insbesondere Ruß, speichert. Stromauf und stromab des Partikelfilters 16 sind Drucksensoren 18, 20 angeordnet, die den Druck p1 vor dem Partikelfilter 16 sowie den Druck p2 hinter dem Partikelfilter 16 messen und auf diese Weise die Bestimmung des Druckabfalls Δp über den Dieselpartikelfilter 16 erlauben. Selbstverständlich kann die Abgasanlage 14 noch weitere, hier nicht dargestellte Komponenten, wie etwa Katalysatoren und/oder Gassensoren umfassen.

Die Kurbelwelle 22 des Motors 10 ist mit einer insgesamt mit 24 bezeichneten Antriebseinheit wirkverbunden. Insbesondere wird die mechanische Antriebsenergie des Motors 10 über ein Automatikgetriebe 26 auf eine mit 28 angedeutete Antriebsachse und den dazugehörigen Rädern mit einer gewünschten Übersetzung übertragen. Über eine Kupplung 30 ist die Antriebswelle 22 von dem Getriebe 26 lösbar. Bei dem Automatikgetriebe 26 handelt es sich gemäß dem vorliegenden Beispiel um ein Direktschaltgetriebe DSG, das über zwei Getriebehälften verfügt, von denen eines in die geraden und das andere in die ungeraden Gänge übersetzt. Diese Getriebehälften wirken über getrennte Kupplungen mit dem Motor 10, von denen hier- nur eine - mit dem Bezugszeichen 30 gekennzeichnet - dargestellt ist. Optional kann das Getriebe derart ausgebildet sein, dass es wahlweise im Automatikmodus oder im Tiptronic-Modus betrieben werden kann. Im Tiptronic-Modus kann der Fahrer manuell ohne Kupplungsbetätigung schalten. Dies kann entweder über einen am Lenkrad des Fahrzeugs angeordneten Wippschalter oder eine separate Schaltgasse des Getriebebetätigungshebels erfolgen.

Die Steuerung des Getriebes 26 erfolgt über eine Getriebesteuerung 32, in der ein Programmalgorithmus 34 zur Steuerung der erfindungsgemäßen Getriebeunterstützung bei einer Regeneration des Partikelfilters 16 hinterlegt ist. Hierzu gehen verschiedene Parameter in die Getriebesteuerung 32 ein. Insbesondere sind dies die Motordrehzahl n sowie die Fahrzeuggeschwindigkeit v. Darüber hinaus erhält die Getriebesteuerung 32 einen Pedalwert PW eines Fahrpedals 36. Weitere, hier nicht dargestellte Eingangsgrößen betreffen die Leerlaufdrehzahl des Motors 10, die aktuelle Drehzahl der Abtriebswelle des Getriebes 26, der Betätigungsstatus des Getriebes 26 (Automatik-oder Tiptronic-Modus und innerhalb des Automatikmodus der gewählte Fahrmodus wie Drive- oder Sport-Stellung) und andere

Die Abgasdrücke p1 und p2 vor beziehungsweise hinter dem Partikelfilter 16, gehen in ein Motorsteuergerät 38 ein, das die Funktionalität des Partikelfilters 16 überwacht und den Regenerationsbedarf feststellt. Nach Feststellung des Regenerationsbedarfs des Partikelfilters 16 in Abhängigkeit von den gemessenen Drücken p1 und p2 durch das Motorsteuergerät 38, bereitet der Motor 10 - wie z.B. in EP 0417383 A beschrieben - die Bedingungen zur Erhöhung der Abgastemperatur vor oder leitet sie gegebenenfalls direkt ein. Um die Regeneration effektiver durchführen zu können, meldet das Motorsteuergerät 38 den Regenerationsbedarf an das Getriebesteuergerät 32, welches den Motor gemäß der vorliegenden Erfindung durch Bereitstellung ausreichend hoher Motordrehzahlen unterstützt.

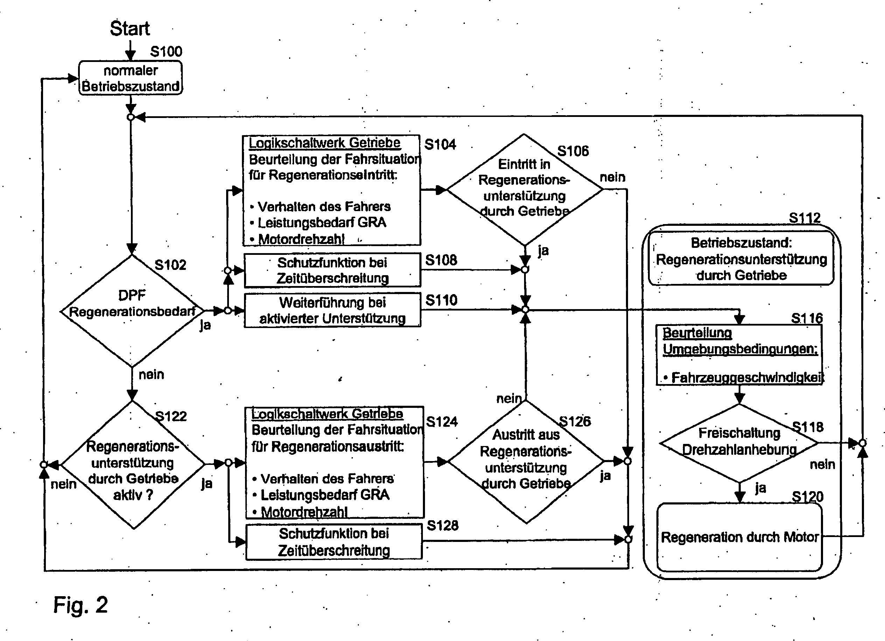

Ein bevorzugter Verfahrensablauf zur Durchführung einer Regeneration des Partikelfilters 16 wird anhand Figur 2 erläutert.

Das Verfahren startet im Schritt S100 in einem normalen Betriebszustand, das heißt einem Zustand, in dem die von der Getriebesteuerung 32 ausgewählte Gangstufe des Getriebes 26 ausschließlich in Abhängigkeit des Betriebspunktes des Motors 10, wie etwa die Motordrehzahl n und die aus dem Pedalwert PW abgeleitete Motorlast, bestimmt wird. Von dort geht das Verfahren zu Schritt S102 über, wo ein möglicher Regenerationsbedarf des Dieselpartikelfilters 16 abgefragt wird. Dies kann beispielsweise mittels der durch die beiden Drucksensoren 18, 20 erfassten Abgasdrücke p1 und p2, insbesondere eine Differenz dieser Drücke (Druckabfall Δ p), festgestellt werden. Alternativ kann eine Regenerationsnotwendigkeit jedoch auch ohne Messung des Druckabfalls über den Filter 16 erfolgen, indem beispielsweise die Partikelrohemission des Motors 10 über geeignete Modelle berechnet und für die Betriebsdauer seit der letzten Regeneration integriert wird.

Wird in Schritt S102 ein Regenerationsbedarf des Partikelfilters 16 festgestellt, das heißt die Partikelbeladung beziehungsweise der Druckabfall über dem Filter 16 überschreitet einen vorbestimmten Schwellenwert, geht das Verfahren zu Schritt S104 über, wo die Eignung der Fahrsituation hinsichtlich des Regenerationseintrittes beurteilt wird, insbesondere ob die für die Getriebeunterstützung erforderlichen Vorraussetzungen erfüllt sind. Befindet sich der Motor 10 zu diesem Zeitpunkt bereits oberhalb der zur Regenerationsunterstützung geforderten Motormindestdrehzahl, erfolgt der Eintritt in den Unterstützungsmodus (S106) sofort, da keine Rückschaltung erforderlich ist. Liegt die Motormindestdrehzahl hingegen nicht vor, wird erfindungsgemäß in Schritt S104 überprüft, ob eine positive Änderung einer Fahrleistungsanforderung, insbesondere ein vorgegebener Betrag einer positiven Fahrleistungsanforderung, vorliegt. Dies kann etwa in einer Beschleunigungssituation der Fall sein, in welcher der Fahrer das Fahrpedal 36 um einen bestimmten Betrag ΔPW betätigt. Fährt der Fahrer mit einer Geschwindigkeitsregelanlage GRA wird an Stelle der Änderung des Pedalwerkes PW eine positive Mindeständerung des GRA-Leistungsbedarfs gefordert. Liegt diese Vorraussetzung vor, so wird im Schritt S106 der Eintritt in die Regeneration durch die Getriebeunterstützung freigegeben und die Rückschaltung insbesondere in den nächstniedrigeren Gang erfolgt. Danach geht das Verfahren zu Block S112 über, dessen Abläufe später näher beschrieben werden. Liegen die Vorraussetzungen für den Eintritt in die Regenerationsunterstützung durch das Getriebe 26 nicht vor, geht das Verfahren von Schritt S106 wieder zum normalen Betriebszustand S100 zurück und gelangt über S102 wieder zu Schritt S104, wo die Fahrsituation erneut beurteilt wird. Dieser Zyklus wiederholt sich so lange, bis die positive Fahrteistungsanforderung (durch den Fahrer oder die GRA) oder die Motormindestdrehzahl vorliegen.

Für den Fall, dass die Voraussetzungen für die Regenerationsunterstützung durch das Getriebe 26 über eine ungewöhnlich lange Betriebsdauer nicht eintreten, ist in Schritt S108 eine Schutzfunktion vorgesehen, wonach nach Ablauf einer applizierten Zeitspanne Δt nach erstmaliger Feststellung der Regenerationsnotwendigkeit in S102 ein Zwangseintritt in die Regenerationsunterstützung durch das Getriebe auch ohne entsprechende positive Fahrieistungsanforderung erfolgt. Demnach wird in S108 überprüft, ob seit Feststellung des Regenerationsbedarfs in S102 die Zeitspanne Δt abgelaufen ist. Bejahendenfalls geht das Verfahren zu dem Block S112 über. Ist die Zeitspanne Δt jedoch noch nicht verstrichen, wird weiterhin das Vorliegen der Voraussetzungen in S104 überprüft.

Wird in der Abfrage S102 der Regenerationsbedarf des Partikelfilters 16 festgestellt und liegt gleichzeitig eine aktive Regenerationsunterstützung durch das Getriebe 26 vor, so wird in Schritt S110 die Weiterführung der Regenerationsunterstützung durch das Getriebe gefordert. Auch in diesem Fall geht das Verfahren zu Block S112 weiter.

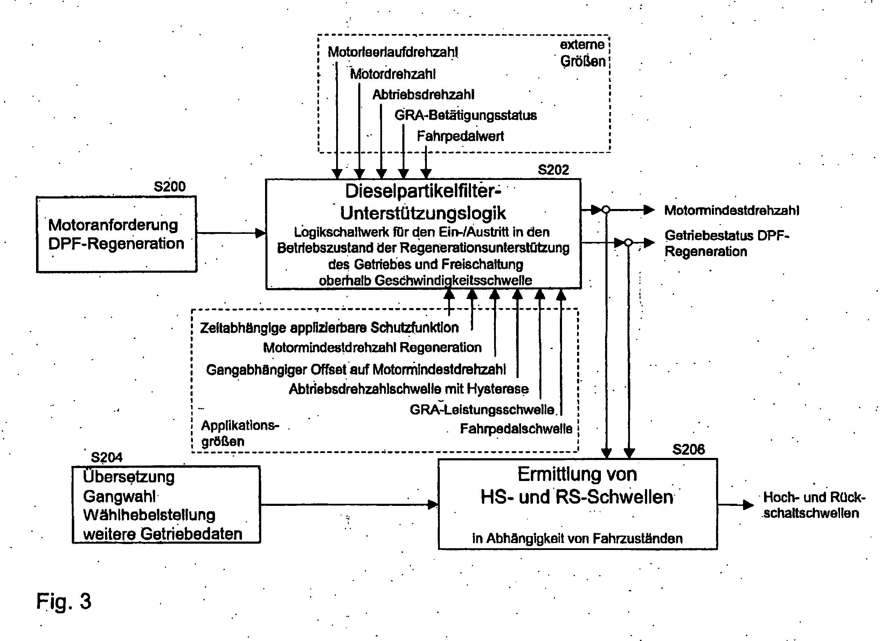

Mit dem Übergang zu Block S112 befindet sich das Getriebe 26 im Betriebszustand der Regenerationsunterstützung. In diesem Zustand ist in der Regel ein niedrigerer Gang eingelegt als im normalen Betriebszustand. Dadurch wird die Motordrehzahl permanent oberhalb einer applizierbaren Schwelle (Motormindestdrehzahl, siehe Figur 3) gehalten, die es dem Motor ermöglicht, die Regeneration tatsächlich durchzuführen. Im Block S112 wird zunächst in Schritt S116 überprüft, ob der Betriebszustand des Fahrzeugs den Vorraussetzunger für die Durchführung der Partikelfilterregeneration entspricht. Insbesondere wird hier überprüft, ob die Fahrzeuggeschwindigkeit einen unteren Schwellenwert überschreitet. Der Grund für diese Bedingung ist, dass die Regeneration bei geringer Motorleistung verhältnismäßig ineffektiv und langsam verläuft. Solche geringen Motorleistungen liegen im Besonderen bei niedrigen Geschwindigkeiten vor, wie beim Rangieren, im Stau oder in Wohngebieten mit besonderer Geschwindigkeitsbegrenzung. In diesen Situationen kann der Motor einerseits nur erschwert regenerieren (im Folgenden zu S120 erklärt), andererseits würden hier hohe Drehzahlen vor allem durch einen erhöhten Geräuschpegel und ein "nervöses" Fahrverhalten stören. Wird die Geschwindigkeitsschwelle in Schritt S116 nicht überschritten und die Drehzahlanhebung in S118 folglich nicht freigeschaltet, bleibt der Getriebebetriebszustand Regenerationsunterstützung S112 über die Entscheidungsblöcke S102 und S110 erhalten.

Ist der Betriebszustand günstig, das heißt liegt eine ausreichende Fahrzeuggeschwindigkeit vor, wird in Schritt S118 die tatsächliche Drehzahlanhebung freigeschaltet und unter Berücksichtigung der Blöcke S204 und S206 (Figur 3) in Schritt S120 durchgeführt. Damit bietet das Getriebe dem Motor verbesserte Grundvoraussetzungen, um Betriebszustände zu erreichen, die prinzipiell hohe Abgastemperaturen ermöglichen. Der Schritt S120 repräsentiert die endgültige Entscheidungsgewalt des Motorsteuergerätes 38, die Regeneration tatsächlich durchzuführen. Hohe Drehzahlen führen zwar zu einem höheren Abgasmassenstrom, nicht aber zwangsläufig zu höheren Abgastemperaturen, die lastabhängig sind. Um dem Dieselpartikelfilter 16 den effektiven Abbrand der Partikel (Regeneration) zu ermöglichen, müssen im Motor 10 auch fahrsituationsabhängig zusätzliche Verstellungen in der Motorsteuerung gegenüber dem normalen Betriebszustand des Motors erfolgen (Regenerationsunterstützung durch den Motor). Ob der Motor die Regeneration aktuell ausführt oder nicht; wirkt gemäß den Figuren 2 und 3 nicht auf das weitere Schaltverhalten oder den Betriebszustand des Getriebes 26 zurück. Darüber hinaus haben die Getriebe-Betriebszustände "normal" oder "Regenerationsunterstützung'' keinen einschränkenden Einfluss auf den Motor. Die Motorsteuerung 38 sendet ein Signal an die Getriebesteuerung 32, dass der Motor 10 unterstützt werden soll und erhält vom Getriebe 26 eine höhere Drehzahl gegenüber dem Normalbetrieb (falls die Bedingungen hierfür vorliegen). Umgekehrt sendet die Getriebesteuerung 32 kein Signal, das dem Motor 10 die Regeneration verbietet. Somit kann der Motor 10 die Regeneration auch dann durchführen oder fortsetzen, wenn er nicht vom Getriebe 26 unterstützt wird, solange der Motorbetriebszustand dieses zulässt. Dem Motor werden mit den Maßnahmen der Regenerationsunterstützung durch das Getriebe 26 zusätzliche Fahrsituationen bereitgestellt, in denen eine Regeneration erfolgen kann. Das führt auch zu einer kürzeren Gesamtdauer der Regeneration und höheren Effizienz der Regeneration, da seltener ein Wechsel zwischen hohen und niedrigen Abgastemperaturen stattfindet.

Wird auf der anderen Seite in Schritt S102 kein Regenerationsbedarf des Partikelfilters 16 festgestellt, das heißt die Beladungsschwelle wird nicht überschritten, geht das Verfahren von S102 zu Schritt S122 über, wo überprüft wird ob bereits eine Regenerationsunterstützung durch das Getriebe 26 aktiviert ist. Wird diese Frage verneint geht das Verfahren zu seinem Ausgangspunkt in S100 zurück und die Getriebesteuerung 32 arbeitet im normalen Modus.

Wird die Abfrage in S122 hingegen bejaht, geht das Verfahren zu Schritt S124 über, wo beurteilt wird, ob die Bedingungen für die Fahrsituation, die einen Regenerationsaustritt erlauben, vorliegen. Ist die Motordrehzahl zu diesem Zeitpunkt bereits so niedrig, dass zum Verlassen der Regenerationsunterstützung keine Hochschaltung erforderlich ist, verlässt das Getriebe 26 den Regenerationsunterstützungsmodus sofort. 1st dies nicht der Fall, wird erfindungsgemäß an dieser Stelle wiederum eine Änderung der Fahrleistungsanforderung entweder durch eine entsprechende Fahrpedalbetätigung des Fahrers oder eine Leistungsbedarfsänderung der GRA abgewartet. Dabei wird für den Regenerationsaustritt eine negative Fahrleistungsanforderung gefordert, das heißt eine Zurücknahme des Gaspedals 36 oder des GRA-Leistungsbedarfs um einen applizierten Betrag. Liegt eine der Bedingungen (negative Leistungsanforderung oder entsprechende Motordrehzahl) vor, wird in Schritt S126 der Austritt aus der Regenerationsunterstützung durch das Getriebe 26 (Getriebesteuerung 32) freigegeben, so dass dieses wieder in den normalen Schaltbetrieb (S100) zurückgesetzt wird. Ist der Übergang in den normalen Schaltbetrieb durch die (applizierte) negative Leistungsanforderung begründet, liegen in der Regel die Vorraussetzungen für die Schaltung in den nächsthöheren Gang vor und sie wird ausgeführt. Liegen die Vorraussetzungen für den Regenerationsaustritt nicht vor, wird die Abfrage in Schritt S126 vemeint und das Verfahren geht weiter zu Block S112, wo die Regenerationsunterstützung durch das Getriebe fortgeführt wird. Auch im Falle des Regenerationsaustritts ist in Schritt S128 eine Schutzfunktion vorgesehen. Demnach wird bei Ablauf einer applizierten Zeitspanne Δt nach erstmaliger Feststellung des Regenerationsabschlusses in Schritt S102, ohne dass die Bedingungen für den Regenerationsaustritt in S124 eingetreten sind, der Austritt aus der Regenerationsunterstützung durch das Getriebe 26 zwangsweise durchgeführt. In diesem Fall geht das Verfahren von Schritt S128 direkt zum Normalbetrieb in Schritt S100 zurück, wobei die Hochschaltung des Getriebes in einen höheren Gang, insbesondere in den nächsthöheren Gang, durchgeführt wird.

In Figur 3 sind in einem Blockdiagramm die wichtigsten Signale sowie die für das erfindungsgemäße Verfahren relevanten Ein- und Ausgangsgrößen für die Getriebesteuerung 32 und den dort abgelegten Programmalgorithmus 34 dargestellt. Dabei sind in dem oberen Teil der Abbildung die im Programmalgorithmus 34 der Getriebesteuerung 32 ablaufenden Vorgänge zur Sicherstellung einer Motormindestdrehzahl durch die entsprechende Gangwahl des Getriebes 26 dargestellt und im unteren Teil die Ermittlung der Hochschalt- und Rückschaltschwellen durch die Getriebesteuerung 32. In Block S200 wird eine Regenerationsnotwendigkeit des Partikelfilters 16 festgestellt und eine Motorregenerationsanforderung, das heißt die Notwendigkeit einer motorischen Abgastemperaturerhöhung, durch die Motorsteuerung 38 an die Getriebesteuerung 32 ausgegeben. In Block S202 erfolgt die Auswertung verschiedener externer, in die Getriebesteuerung 32 eingelesener Größen sowie deren Abgleich mit vorgegebenen Applikationsgrößen, um die für die Dieselpartikelfilterregeneration notwendige Motormindestdrehzahl zu bestimmen sowie den Getriebestatus festzulegen. Als externe Größen werden hier eine aktuelle Motorleerlaufdrehzahl, eine aktuelle Motordrehzahl (Kurbelwellendrehzahl), eine Abtriebsdrehzahl des Getriebes 26, ein GRA-Betätigungsstatus (aktuelle GRA-Leistungsanforderung) sowie ein Fahrpedalwert eingelesen. Als festgelegte Applikationsgrößen kommen hier die zeitabhängige applizierbare Schutzfunktion (Zeitspanne Δ t in S108/S128 in Figur 2), die Motormindestdrehzahl (zur DPF-Regenerationsunterstützung), die Getriebeabtriebsdrehzahlschwelle mit Hysterese sowie die der geforderten Fahrleistungsanforderung entsprechende GRA-Leistungsschwelle beziehungsweise Fahrpedalschwelle zum tragen. Als Ausgangsgrößen werden hier die für die Dieselpartikelfilterregeneration notwendige Motormindestdrehzahl zur Bestimmung der entsprechenden Schaltschwellen ermittelt sowie der im Schritt S122 in Figur 2 abgefragte Getriebestatus (Regenerationsbit = 1 für freigegebene Regenerationsunterstützung oder 0 für nicht freigegebene Regenerationsunterstützung).

Zur Ermittlung der Hochschalt- und Rückschaltschwellen werden im Block S206 einerseits die Ausgabesignale des Programmalgorithmus 34 aus Block S202 (Motormindestdrehzahl und Getriebestatus) von der Getriebesteuerung 32 eingelesen und andererseits in Abhängigkeit von der Übersetzung des Getriebes 26 in der aktuellen Gangstufe, der Wählhebelstellung des Automatikgetriebes (D- oder S-Schaltprogramm) und weiteren Getriebedaten, die Hochschalt- und Rückschaltschwellen bestimmt, die eine durchgehende Regeneration des Partikelfilters ermöglichen. Hierzu wird in der Getriebesteuerung 32 in einem weiteren Teilalgorithmus eine Kennlinie (gangabhängigre Offset auf Motormindestdrehzahl) zur Anhebung beziehungsweise Absenkung der Hochschalt- und Rückschaltschwellen implementiert, die nur bei aktiver Regenerationsunterstützung (Zustand S112 in Figur 2) angewendet wird. Die Ermittlung der Hochschalt- und Rückschaltschwellen in Abhängigkeit von Fahrzuständen in S206 unter Berücksichtigung der für den Betriebszustand Regenerationsunterstützung verschobenen Schaltschwellen bewirkt, dass dem Motor nach Eintritt in den Regenerationsmodus ein deutlich größeres Spektrum an Fahrsituationen, in denen die Bedingungen für eine Regeneration erfüllt werden und bleiben, zur Verfügung steht, als ohne die erfindungsgemäße Unterstützung durch das Getriebe.

## Patentansprüche

1. Verfahren zur Regeneration eines in einer Abgasanlage (14) einer Verbrennungskraftmaschine (10), insbesondere eines Dieselmotors, angeordneten Partikelfilters (16), wobei zur Beeinflussung einer Abgastemperatur der Verbrennungskraftmaschine (10) ein Schaltzustand eines Automatikgetriebes (26) verändert wird, so dass während der Regeneration eine Mötormindestdrehzahl eingehalten oder überschritten wird,
**dadurch gekennzeichnet, dass**
falls zum Zeitpunkt der-Feststellung einer Regenerationsnotwendigkeit und/oder eines Regenerationsabschlusses des Partikelfilters (16) eine gewünschte Motordrehzahl nicht vorliegt, die Änderung des Schaltzustandes des Automatikgetriebes (26) so lange verzögert wird, bis eine Änderung einer Fahrleistungsanforderung vorliegt.

2. Verfahren nach Anspruch 1,
**dadurch gekennzeichnet, dass**
zur Einleitung der Regeneration die Änderung des Schaltzustandes des Automatikgetriebes (26), insbesondere die Schaltung in eine niedrigere Gangstufe, so lange verzögert wird, bis eine positive Fahrleistungsanfordenung vorliegt.

3. Verfahren nach Anspruch 1,
**dadurch gekennzeichnet, dass**
zur Beendigung der Regeneration die Änderung des Schaltzustandes des Automatikgetriebes (26), insbesondere die Schaltung in eine höhere Gangstufe, so lange verzögert wird, bis eine negative Fahrleistungsanforderung vorliegt.

4. Verfahren nach einem der vorhergehenden Ansprüche,
**dadurch gekennzeichnet, dass**
die Größe der Änderung der Fahrleistungsanforderung eine applizierbare schwelle überschreitet muss, ehe die Änderung des Schaltzustandes des Automatikgetriebes (26) erfolgt.

5. Verfahren nach Anspruch 4,
**dadurch gekennzeichnet, dass**
eine aktuelle Fahrleistungsanforderung zum Zeitpunkt der Feststellung der Regenerationsnotwendigkeit und/oder des Regenerationsabschlusses als Basiswert gemerkt wird und dieser Basiswert zur Einleitung der Regeneration nach Feststellung der Regenerationsnotwendigkeit zu niedrigeren Fahrleistungsanforderungen mitgeführt wird und/oder zur Beendigung der Regeneration nach Feststellung des Regenerationsabschlusses zu höheren Fahrleistungsanforderungen mitgeführt wird.

6. Verfahren nach einem der vorhergehenden Ansprüche,
**dadurch gekennzeichnet, dass**
unterhalb einer applizierbaren Fahrzeuggeschwindigkeitsschwelle und/oder unterhalb einer Drehzahlschwelle eine Änderung des Schaltzustandes zur Einleitung der Regeneration unterdrückt wird.

7. Verfahren nach einem der vorhergehenden Ansprüche,
**dadurch gekennzeichnet, dass**
die Änderung des Schaltzustandes spätestens nach Ablauf einer applizierbaren Zeitspanne nach. Feststellung der Regenerationsnotwendigkeit und/oder des Regenerationsabschlusses erfolgt.

8. Verfahren nach einem der vorhergehenden Ansprüche,
**dadurch gekennzeichnet, dass**
die Änderung der Fahrleistungsanforderung durch eine Fahwedalbetätigung durch den Fahrer oder automatisch durch eine Geschwindigkeitsregelanlage (GRA) oder einer aktiven Fahrgeschwindigkeitsregelung (ACC) angefordert wird.

9. Verfahren nach einem der vorhergehenden Anspruche,
**dadurch gekennzeichnet, dass**
die Änderung des Schaltzustandes des Automatikgetriebes (26) nur dann verzögert wird, wenn ein aktuell vorliegender Schaltzustand des Automatikgetriebes (26) die gewünschte Abgastemperatur nicht gewährleistet.

10. Getriebesteuerung (32) eines Automatikgetriebes (26) zur Unterstützung einer
Regeneration eines in einer Abgasanlage (14) einer Verbrennungskraftmaschine (10), insbesondere eines Dieselmotors, angeordneten Partikelfilters (16), wobei die Getriebesteuerung (32) zur Beeinflussung einer Abgastemperatur der Verbrennungskraftmaschine (10) einen Schaltzustand eines Automatikgetriebes (26) so verändert, dass während der Regeneration eine Motormindestdrehzahl eingehalten oder überschritten wird,
**dadurch gekennzeichnet, dass**
die Getriebesteuerung (32) einen Programmalgorithmus (34) aufweist, der nach Feststellung einer Regenerationsnotwendigkeit oder eines Regenerationsabschlusses des Partikelfilters (16) die Änderung des Schaltzustandes des Automatikgetriebes (26) so lange verzögert, bis eine Änderung einer. Fahrleistungsanforderung vorliegt, falls zum Zeitpunkt der Feststellung einer Regenerationsnotwendigkeit und/oder eines Regenerationsabschlusses des Partikelfilters (16) eine gewünschte Motordrehzahl nicht vorliegt.

11. Getriebesteuerung nach Anspruch 10.
**dadurch gekennzeichnet, dass**
das Automatikgetriebe (26) ein Drehzahlwandler- oder ein Direktschaltgetriebe ist.

## Claims

1. Method for the regeneration of a particle filter (16) which is arranged in an exhaust system (14) of an internal combustion engine (10), in particular of a diesel engine, with a shift state of an automatic transmission (26) being varied, such that a minimum engine speed is maintained or exceeded during the regeneration, in order to influence an exhaust-gas temperature of the internal combustion engine (10),
**characterized in that**
if a desired engine speed is not present at the time at which the requirement for regeneration is determined and/or at an end of regeneration of the particle filter (16), the change in the shift state of the automatic transmission (26) is delayed until a change in a drive power demand takes place.

2. Method according to Claim 1,
**characterized in that**,
in order to initiate the regeneration, the change in the shift state of the automatic transmission (26), in particular the shift into a lower gear stage, is delayed until a positive drive power demand is present.

3. Method according to Claim 1,
**characterized in that**,
in order to end the regeneration, the change in the shift state of the automatic transmission (26), in particular the shift into a higher gear stage, is delayed until a negative drive power demand is present.

4. Method according to one of the preceding claims,
**characterized in that**
the magnitude of the change in the drive power demand must exceed an applicable threshold before the change in the shift state of the automatic transmission (26) takes place.

5. Method according to Claim 4,
**characterized in that**
a drive power demand present at the time at which the requirement for regeneration and/or the end of regeneration is determined is recorded as a base value and said base value is maintained to low drive power demands in order to initiate the regeneration after the requirement for regeneration is determined, and/or is maintained to high drive power demands in order to end the regeneration after the end of regeneration is determined.

6. Method according to one of the preceding claims,
**characterized in that**,
below an applicable vehicle speed threshold and/or below a rotational speed threshold, a change in the shift state in order to initiate the regeneration is suppressed.

7. Method according to one of the preceding claims,
**characterized in that**
the change in the shift state takes place at the latest after the expiry of an applicable time period after the requirement for regeneration and/or the end of regeneration is determined.

8. Method according to one of the preceding claims,
**characterized in that**
the change in the drive power demand is demanded by means of a throttle pedal actuation by the driver or automatically by means of a speed control system (GRA) or an active driving speed controller (ACC).

9. Method according to one of the preceding claims,
**characterized in that**
the change in the shift state of the automatic transmission (26) is delayed only when a present shift state of the automatic transmission (26) does not ensure the desired exhaust-gas temperature.

10. Transmission controller (32) of an automatic transmission (26) for assisting a regeneration of a particle filter (16) arranged in an exhaust system (14) of an internal combustion engine (10), in particular of a diesel engine, with the transmission controller (32) varying a shift state of an automatic transmission (26), such that a minimum engine speed is maintained or exceeded during the regeneration, in order to influence an exhaust-gas temperature of the internal combustion engine (10),
**characterized in that**
the transmission controller (32) has a program algorithm (34) which, after a requirement for regeneration or an end of regeneration of the particle filter (16) is determined, and if a desired engine speed is not present at the time at which a requirement for regeneration and/or an end of regeneration of the particle filter (16) is determined, delays the change in the shift state of the automatic transmission (26) until a change in a drive power demand takes place.

11. Transmission controller according to Claim 10,
**characterized in that**
the automatic transmission (26) is a rotational speed converter or a direct shift transmission.

## Revendications

1. Procédé de régénération d'un filtre à particules (16) disposé dans une installation de gaz d'échappement (14) d'un moteur à combustion interne (10), en particulier d'un moteur diesel, dans lequel, pour influencer une température de gaz d'échappement du moteur à combustion interne (10), un état de commutation d'une boîte de vitesses automatique (26) est modifié de telle sorte que pendant la régénération, un régime minimal du moteur soit maintenu ou dépassé,
**caractérisé en ce que**,
si à l'instant de l'établissement de la nécessité d'effectuer une régénération et/ou de la terminaison une régénération du filtre à particules (16), un régime du moteur souhaité n'est pas acquis, la modification de l'état de commutation de la boîte de vitesses automatique (26) est retardée jusqu'à ce qu'il se produise une modification de la demande de puissance de conduite.

2. Procédé selon la revendication 1,
**caractérisé en ce que**
pour amorcer la régénération, la modification de l'état de commutation de la boîte de vitesses automatique (26), en particulier la commutation dans un rapport de vitesse inférieur, est retardée jusqu'à ce qu'il se produise une demande de puissance de conduite positive.

3. Procédé selon la revendication 1,
**caractérisé en ce que**
pour terminer la régénération, la modification de l'état de commutation de la boîte de vitesses automatique (26), en particulier la commutation dans un rapport de vitesse supérieur, est retardée jusqu'à ce qu'il se produise une demande de puissance de conduite négative.

4. Procédé selon l'une quelconque des revendications précédentes,
**caractérisé en ce que**
l'ampleur de la modification de la demande de puissance de conduite doit dépasser un seuil applicable avant que la modification de l'état de commutation de la boîte de vitesses automatique (26) ait lieu.

5. Procédé selon la revendication 4,
**caractérisé en ce**
**qu'**une demande de puissance de conduite actuelle à l'instant de l'établissement de la nécessité d'effectuer une régénération et/ou de la terminaison d'une régénération est notée comme valeur de base et cette valeur de base est utilisée pour amorcer la régénération après l'établissement de la nécessité d'effectuer une régénération pour des demandes de puissance de conduite plus basses et/ou pour terminer la régénération après l'établissement de la terminaison de la régénération pour des demandes de puissance de conduite plus élevées.

6. Procédé selon l'une quelconque des revendications précédentes,
**caractérisé en ce**
**qu'**en dessous d'un seuil de vitesse du véhicule applicable et/ou en dessous d'un seuil de régime, la modification de l'état de commutation pour amorcer la régénération est supprimée.

7. Procédé selon l'une quelconque des revendications précédentes,
**caractérisé en ce que**
la modification de l'état de commutation s'effectue au plus tard après l'écoulement d'un intervalle de temps applicable après l'établissement de la nécessité d'effectuer une régénération et/ou de la terminaison de la régénération.

8. Procédé selon l'une quelconque des revendications précédentes,
**caractérisé en ce que**
la modification de la demande de puissance de conduite est demandée par l'actionnement de la pédale d'accélérateur par le conducteur ou automatiquement par une installation de régulation de vitesse (GRA) ou par une régulation de vitesse de conduite active (ACC).

9. Procédé selon l'une quelconque des revendications précédentes,
**caractérisé en ce que**
la modification de l'état de commutation de la boîte de vitesses automatique (26) est seulement retardée lorsqu'un état de commutation actuellement présent de la boîte de vitesses automatique (26) ne garantit pas la température de gaz d'échappement souhaitée.

10. Commande de boîte de vitesses (32) d'une boîte de vitesses automatique (26) pour supporter la régénération d'un filtre à particules (16) disposé dans une installation de gaz d'échappement (14) d'un moteur à combustion interne (10), en particulier d'un moteur diesel, dans laquelle la commande de boîte de vitesses (32) modifie un état de commutation d'une boîte de vitesses automatique (26) pour influencer une température de gaz d'échappement du moteur à combustion interne (10) de telle sorte que, pendant la régénération, un régime minimal du moteur soit maintenu ou dépassé,
**caractérisée en ce que**
la commande de boîte de vitesses (32) présente un algorithme de programmation (34) qui, après l'établissement de la nécessité d'effectuer une régénération ou de la terminaison de la régénération du filtre à particules (16), retarde la modification de l'état de commutation de la boîte de vitesses automatique (26) jusqu'à ce qu'une modification de la demande de puissance de conduite se produise, si à l'instant de l'établissement de la nécessité d'effectuer une régénération et/ou de la terminaison de la régénération du filtre à particules (16), un régime du moteur souhaité n'est pas acquis.

11. Commande de boîte de vitesses selon la revendication 10,
**caractérisée en ce que**
la boîte de vitesses automatique (26) est un convertisseur de régime ou une transmission manuelle directe.
